(19) Europäisches Patentamt / European Patent Office / Office européen des brevets

(11) **EP 2 032 415 B1**

(12) **FASCICULE DE BREVET EUROPEEN**

(45) Date de publication et mention
de la délivrance du brevet:
**23.03.2016 Bulletin 2016/12**

(21) Numéro de dépôt: **07788964.0**

(22) Date de dépôt: **06.06.2007**

(51) Int Cl.:
***B62D 6/00*** *(2006.01)*      ***B62D 7/15*** *(2006.01)*
***B60T 8/1755*** *(2006.01)*

(86) Numéro de dépôt international:
**PCT/FR2007/051380**

(87) Numéro de publication internationale:
**WO 2007/147995 (27.12.2007 Gazette 2007/52)**

(54) **PROCEDE ET SYSTEME DE COMMANDE DU BRAQUAGE DE ROUE ARRIERE DIRECTRICE ET VEHICULE CORRESPONDANT**

VERFAHREN UND SYSTEM ZUR STEUERUNG DER LENKUNG EINES GELENKTEN HINTERRADS UND ENTSPRECHENDES FAHRZEUG

METHOD AND SYSTEM FOR CONTROLLING THE STEERING OF A STEERED REAR WHEEL AND CORRESPONDING VEHICLE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **23.06.2006  FR 0605643**

(43) Date de publication de la demande:
**11.03.2009  Bulletin 2009/11**

(73) Titulaire: **Renault S.A.S.**
**92100 Boulogne-Billancourt (FR)**

(72) Inventeur: **MARTINEZ, Didier**
**27920 Saint-Etienne-sous-Bailleul (FR)**

(56) Documents cités:
**US-A- 5 925 083     US-B2- 6 539 298**

EP 2 032 415 B1

## Description

La présente invention relève du domaine des systèmes de commande de véhicules terrestres, en particulier de véhicules automobiles à roues.

De façon classique, les véhicules automobiles sont pourvus d'un châssis, d'un habitacle, de roues reliées au châssis par un mécanisme de suspension avec des roues avant directrices commandées par un volant à la disposition du conducteur dans l'habitacle du véhicule.

Le document FR-A-2 681 303 décrit un dispositif de commande de direction arrière pour véhicule automobile à quatre roues directrices, comprenant une plaque formant came et deux galets disposés dans un même plan médian vertical contenant l'axe longitudinal d'une barre de direction arrière commandant le pivotement des roues arrière.

Ce document décrit également que pour obtenir le meilleur comportement routier possible du véhicule, il est nécessaire de braquer les roues arrière dans le même sens que les roues avant pour une valeur d'angle de braquage du volant inférieure à une valeur de seuil prédéterminée dans le sens opposé aux roues avant lorsque la valeur d'angle de braquage dépasse la valeur de seuil. On obtiendrait ainsi un effet « survireur » souhaitable du véhicule lorsque l'angle de braquage est relativement important, par exemple lorsqu'on gare le véhicule dans un garage ou un parc de stationnement, et un effet « sous-vireur » également souhaitable lorsque l'angle de braquage est relativement petit comme c'est le cas lorsque le véhicule roule relativement rapidement.

Toutefois, un tel dispositif, relativement fruste, ne permet pas d'agir finement sur le comportement du véhicule.

Le document US 2002/198 646 décrit une commande avec braquage et freinage coordonnés en fonction de l'adhérence.

Le document US 2003/55547 décrit un système de commande de braquage et de freinage comprenant un modèle de référence et un estimateur d'états du véhicule.

Le document US 2003/60959 décrit un système de stabilisation de véhicule tenant compte de la vitesse de lacet.

Le document US 2002/32509 décrit un système de commande d'angle de braquage de roue arrière directrice pour diminuer le rayon de braquage et le débord du coin arrière du véhicule à faible vitesse.

Un procédé de commande de braquage de roues directrices pour un véhicule tel que décrit par le préambule de la revendication 1 est connu de US 6345218 B1. Ce type de système est sensible aux variations de paramètres du véhicule.

L'invention vise à remédier à ces inconvénients et propose un procédé et un système de commande évolués, permettant d'améliorer le comportement du véhicule, de corriger le survirage et par conséquent la sécurité du conducteur et le confort de conduite et ce indépendamment de paramètres variables tels que les rigidités de dérive, la masse, l'inertie, le coefficient d'adhérence, tels que décrits dans les revendications 1 et 8.

Le procédé de commande du braquage de roue arrière directrice, selon un aspect de l'invention, est destiné à un véhicule à au moins trois roues. En fonction d'une consigne antérieure de braquage de roue directrice, de caractéristiques géométriques et de données cinématiques du véhicule, on élabore une consigne actuelle de braquage de roue.

On peut utiliser une loi de commande avec stratégie en boucle fermée assurant une excellente stabilité malgré une possible perte d'adhérence du train arrière. La présence d'un modèle du véhicule est facultative, d'où la possibilité de supprimer l'erreur statique.

Dans un mode de réalisation, les caractéristiques géométriques du véhicule comprennent l'empattement L et la distance du centre de gravité à l'essieu directeur $L_i$. Les caractéristiques géométriques sont des invariants pour un véhicule donné et peuvent être enregistrées de façon pérenne à la construction.

Dans un mode de réalisation, les données cinématiques du véhicule comprennent la vitesse V, l'accélération transversale y et la vitesse de lacet $\dot{\psi}$. Les données cinématiques peuvent être mesurées par des capteurs. Les capteurs peuvent servir à d'autres systèmes, par exemple de stabilisation de trajectoire et/ou anti blocage de roue. Les capteurs, déjà présents pour d'autres systèmes, n'augmentent pas le coût de la mise en oeuvre du procédé.

Dans un mode de réalisation, on élabore une consigne de position de braquage à partir de la consigne antérieure de braquage, on élabore une consigne de vitesse de braquage à partir des données cinématiques du véhicule, et on additionne la consigne de position de braquage et la consigne de vitesse. L'asservissement en position permet d'éviter une mise en butée intempestive de l'actionneur.

Dans un mode de réalisation, on élabore une consigne de vitesse de braquage en calculant la différence entre le quotient de l'accélération transversale par la vitesse et une fonction de la vitesse de lacet et de la vitesse. On parvient ainsi à réduire le survirage de façon efficace.

Dans un mode de réalisation, la consigne de vitesse de braquage est inférieure ou égale à la vitesse maximale de l'actionneur de braquage. On évite la saturation de l'actionneur.

Dans un mode de réalisation, si la consigne de vitesse de braquage est supérieure à la vitesse maximale de l'actionneur de braquage, un système de freinage, un système de freinage pilote est actionné. On obvie à la saturation de l'actionneur.

Dans un mode de réalisation, la consigne de braquage est une consigne de braquage de roue arrière.

Dans un mode de réalisation, la consigne de braquage est une consigne de braquage de roue avant.

La présente invention propose également un système de commande du braquage de roue arrière directrice pour véhicule à au moins trois roues, comprenant un moyen d'élaboration d'une consigne actuelle de braquage de roue arrière en fonction de caractéristiques géométriques et de données cinématiques du véhicule, et d'une consigne antérieure de braquage de roue directrice.

Dans un mode de réalisation, le moyen d'élaboration comprend un module de contre-réaction configuré pour calculer $s\alpha_2 = -(\dfrac{\gamma}{V} - s\psi \dfrac{1 + s\dfrac{L_2}{V}}{1 + \tau_0 s})$ dans le domaine de Laplace avec $\alpha_2$ l'angle de braquage, $\gamma$ l'accélération transversale, V la vitesse, $\psi$ l'angle de lacet, $L_2$ l'empattement et $\tau_0 = 10\dfrac{L_2}{V}$.

L'invention propose également un véhicule pourvu d'un châssis et d'au moins trois roues reliées élastiquement au châssis, et d'un système de commande du braquage de roue arrière directrice comprenant un moyen d'élaboration d'une consigne actuelle de braquage de roue arrière en fonction de caractéristiques géométriques et de données cinématiques du véhicule, et d'une consigne antérieure de braquage de roue directrice.

L'invention permet à un véhicule d'adopter le comportement le plus stable possible, quel que soit la sollicitation du conducteur ou l'état de la chaussée. Il convient de tenir compte de certaines situations susceptibles d'engendrer une perte de contrôle du véhicule, par exemple un évitement d'obstacle simple ou double.

L'invention permet de réduire les risques de perte de contrôle dans ce type de cas, qui peuvent être dus à une réponse du véhicule inadaptée car trop vive, pas assez amortie ou encore peu prévisible.

Par ailleurs, l'invention permet un accroissement de la sensation de sécurité, du confort et du plaisir de conduite.

L'invention s'applique à des véhicules à quatre roues, deux avant et deux arrière, à trois roues, ou encore à des véhicules à six roues ou plus, dont au moins quatre directrices.

Le système de commande de roues directrices arrière sur véhicule à quatre roues directrices permet de minimiser, en tenant compte de la vitesse du véhicule, la réponse latérale du véhicule à un coup de volant du conducteur. L'optimisation est faite suivant des critères de sécurité, de confort et d'agrément de conduite.

La présente invention sera mieux comprise à l'étude de la description détaillée de quelques modes de réalisation pris à titre d'exemples nullement limitatifs et illustrés par les dessins annexés, sur lesquels :

- la figure 1 est une vue schématique d'un véhicule équipé d'un système de commande selon un aspect de l'invention ; et

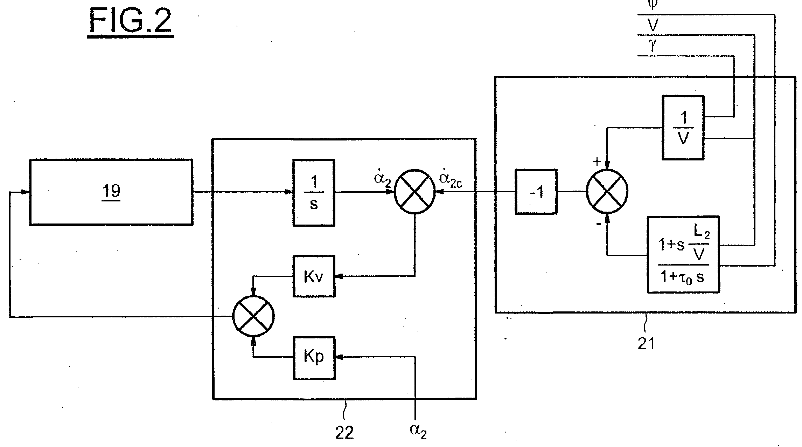

- les figures 2 et 3 sont des schémas logiques du système.

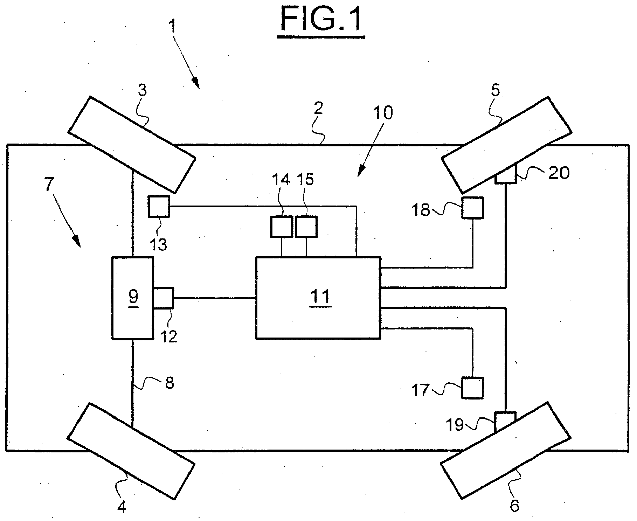

Comme on peut le voir sur la figure 1, le véhicule 1 comprend un châssis 2, deux roues avant directrices 3 et 4 et deux roues arrière directrices 5 et 6, les roues étant reliées au châssis 2 par un mécanisme de suspension non représenté.

Le véhicule 1 se complète par un système de direction 7 comprenant une crémaillère 8 disposée entre les roues avant 3 et 4, un actionneur de crémaillère 9 apte à orienter les roues avant 3 et 4 par l'intermédiaire de la crémaillère 8 en fonction d'ordres reçus, de façon mécanique ou électrique, en provenance d'un volant de direction non représenté, à disposition d'un conducteur du véhicule.

Le système de commande d'aide au braquage 10 comprend une unité de commande 11, un capteur 12 de la position de braquage des roues avant 3 et 4, par exemple positionné sur l'actionneur 9, un capteur 13 de la vitesse de rotation des roues avant permettant de déterminer la vitesse V du véhicule, un capteur 14 de la vitesse de lacet $\psi$ du véhicule, c'est-à-dire de la vitesse de rotation du véhicule autour de son centre de gravité suivant un axe vertical, et un capteur 15 de l'accélération latérale au centre de gravité du véhicule.

En outre, le système 10 comprend des capteurs 17 et 18 de l'angle de braquage des roues arrière 5 et 6, et des actionneurs 19 et 20 permettant d'orienter lesdites roues arrière 5 et 6. Toutefois, un seul capteur 17 et un seul actionneur 19 peuvent suffire à la détection de l'angle de braquage et à l'orientation des roues arrière 5 et 6. Les capteurs de position et de vitesse peuvent être de type optique ou encore magnétique, par exemple à effet Hall, coopérant avec un codeur solidaire d'une partie mobile tandis que le capteur est non tournant.

L'unité de commande 11 peut être réalisée sous la forme d'un microprocesseur équipé d'une mémoire vive, d'une mémoire morte, d'une unité centrale et d'interfaces d'entrée/sortie permettant de recevoir des informations des capteurs et d'envoyer des instructions, notamment aux actionneurs 19 et 20.

Plus précisément, l'unité de commande 11 comprend un bloc d'entrée 21 recevant les signaux en provenance des capteurs 12 à 14, et notamment la vitesse du véhicule V, la vitesse de lacet $\psi$ et l'angle de roues avant $\alpha_1$. La vitesse du véhicule peut être obtenue en faisant la moyenne de la vitesse des roues avant ou des roues arrière telle que mesurée par les capteurs d'un système antiblocage de roues. Dans ce cas, il est prévu un capteur 13 par roue, le système antiblocage de roues comprenant une sortie reliée à une entrée de l'unité de commande 11 pour fournir l'information de vitesse du véhicule. Alternativement, chaque capteur 13 est relié à une entrée de l'unité de commande 11, l'unité de commande 11 effectuant alors la moyenne de la vitesse des roues.

L'unité de commande 11 comprend également un bloc 22 d'asservissement de l'actionneur. L'actionneur est asservi en vitesse pour être compatible avec la commande (vitesse de braquage des roues arrière). Pour éviter des mises en butée intempestives (provoquées par un biais de la consigne en vitesse), l'actionneur est asservi en position.

Le bloc 22 peut tenir compte des équations suivantes :

$$\text{Accélération transverse :} \quad M\gamma = F_1 + F_2 + F_{av}(\alpha_1) + F_{ar}(\alpha_2)$$
$$\text{Vitesse de lacet :} \quad J\ddot{\psi} = F_1 L_1 - F_2 L_2 + F_{av}(\alpha_1)L_1 - F_{ar}(\alpha_2)L_2$$
$$\text{Dérive véhicule :} \quad \gamma = V(\dot{\psi} + \dot{\delta})$$

Effort et dérive du train arrière :

$$F_2 = D_2\left(\delta - \frac{\dot{\psi}}{V}L_2\right) \qquad F_{ar}(\alpha_2) = -D_2\alpha_2 \text{ et } \delta_2 = \delta - \frac{\dot{\psi}L_2}{V} - \alpha_2$$

Effort et dérive train avant :

$$F_1 = D_1\left(\delta + \frac{\dot{\psi}}{V}L_1\right) \qquad F_{av}(\alpha_1) = -D_1\alpha_1 \text{ et } \delta_1 = \delta + \frac{\dot{\psi}L_1}{V} - \alpha_1$$

avec :

M(kg) : Masse totale du véhicule

J(kg.m2) : Inertie de la caisse du véhicule autour de son axe de lacet, i.e. un axe vertical passant par le centre de gravité

L(m) : Empattement du véhicule

$L_1$(m) : Distance du centre de gravité à l'essieu avant

$L_2$(m) : Distance du centre de gravité à l'essieu arrière

$D_1$(N/rad) : Rigidité de dérive de l'essieu avant

$D_2$(N/rad) : Rigidité de dérive de l'essieu arrière

$\gamma$(m/s$^2$) : accélération transversale du véhicule

$\psi$(rad) : Angle de lacet du véhicule

$\delta_1$(rad) : Angle de dérive de l'essieu avant

$\delta_2$(rad) : Angle de dérive de l'essieu arrière

$\delta$ : Angle de dérive au centre de gravité

$\alpha_1$(rad) : Angle de braquage de l'essieu avant

$\alpha_2$(rad) : Angle de braquage de l'essieu arrière

**$F_1$** : effort transverse au train avant

**$F_2$** : effort transverse au train arrière

**$F_{av}(\alpha_1)$** : effort transverse au train avant induit par $\alpha$1

et **$F_{ar}(\alpha_2)$** : effort transverse au train avant induit par $\alpha$2

Le bloc 22 différencie par rapport au temps l'équation de dérive du train arrière (la vitesse du véhicule est considérée comme constante) :

$$\dot{\delta}_2 = \dot{\delta} - \frac{\ddot{\psi}L_2}{V} - \dot{\alpha}_2 = \frac{\gamma}{V} - \dot{\psi} - \frac{\ddot{\psi}L_2}{V} - \dot{\alpha}_2$$

Soit dans le domaine de Laplace :

$$s\delta_2 = \frac{\gamma}{V} - s\psi(1 + s\frac{L_2}{V}) - s\alpha_2$$

L'annulation de la vitesse de dérive de l'essieu arrière, (garantissant le contrôle d'un survirage trop prononcé), fournit la commande de braquage recherchée pour les roues arrière soit :

$$s\alpha_2 = (\frac{\gamma}{V} - s\psi(1 + s\frac{L_2}{V}))$$

L'équation précédente montre que la commande de braquage est, en réalité, une commande en vitesse de braquage résultant :

- d'un retour en réaction d'accélération transverse pondéré par la vitesse
- d'un retour en contre-réaction de la vitesse de lacet préalablement filtrée par une avance de phase.

La loi de commande ne dépend que des paramètres cinématique et géométrique du véhicule (vitesse V et empattement $L_2$). La loi proposée est indépendante des paramètres du véhicule utilisés généralement par d'autres techniques de commande et susceptibles de varier, les principaux étant :

- masse du véhicule,
- rigidités de dérive des trains avant et arrière,
- inertie du véhicule,
- coefficient d'adhérence.

L'interpolation de la loi en fonction de la vitesse est immédiate. La constante de temps $\tau = \frac{L_2}{V}$ diminue avec la vitesse, ce qui traduit qualitativement une augmentation de la rapidité de la boucle en fonction de la vitesse.

La commande de braquage étant déduite d'une simple égalité, la réalisation de celle-ci passe par une réaction ou une contre-réaction de la grandeur $\frac{\gamma}{V} - s\psi(1 + s\frac{L_2}{V})$.

On montre qu'une contre-réaction garantit la stabilité du système. La commande s'écrit :

$$s\alpha_2 = -(\frac{\gamma}{V} - s\psi \frac{(1 + s\frac{L_2}{V})}{1 + \tau_0 s}) \text{ avec } \tau_0 = 10\frac{L_2}{V}$$

La commande proposée montre qu'il n'y a pas lieu d'estimer le comportement dynamique du véhicule via un modèle. La commande corrige l'instabilité à sa source par annulation de la vitesse de dérive du train arrière.

L'asservissement global de l'actionneur est donc constitué de deux boucles imbriquées (boucle de vitesse et boucle de position). Les bandes passantes respectives des deux boucles sont ajustées pour :

- réaliser la consigne de vitesse de braquage générée par la contre-réaction

$$s\alpha_2 = -(\frac{\gamma}{V} - s\psi \frac{(1 + s\frac{L_2}{V})}{1 + \tau_0 s})$$

- réguler en position l'angle de braquage de l'actionneur (typiquement un braquage moyen nul) lorsque la contre-réaction précédente n'est plus excitée.

Si $\omega_1$ et $\omega_2$ sont les bandes passantes des deux boucles précédentes, les gains de vitesse et en position de l'actionneur peuvent être approchés par :

$$Kv = \omega_2 + 2\omega_1 \qquad (\text{gain en vitesse})$$

$$Kp = \omega_1{}^2 + \omega_1\omega_2 \qquad (\text{gain en position})$$

Contrairement à une approche de type observateur, l'architecture proposée permet une régulation de la position de l'actionneur dont les performances (erreur statique entre autre) sont indépendantes des paramètres du véhicule. Une fois appliquée la correction de trajectoire induite par la consigne de vitesse $\alpha_{2c}$, le retour à un braquage nul des roues arrière est garanti par la boucle de régulation en position. Il est tout à fait possible de rajouter une consigne de braquage pour améliorer la maniabilité du véhicule aux basses vitesses.

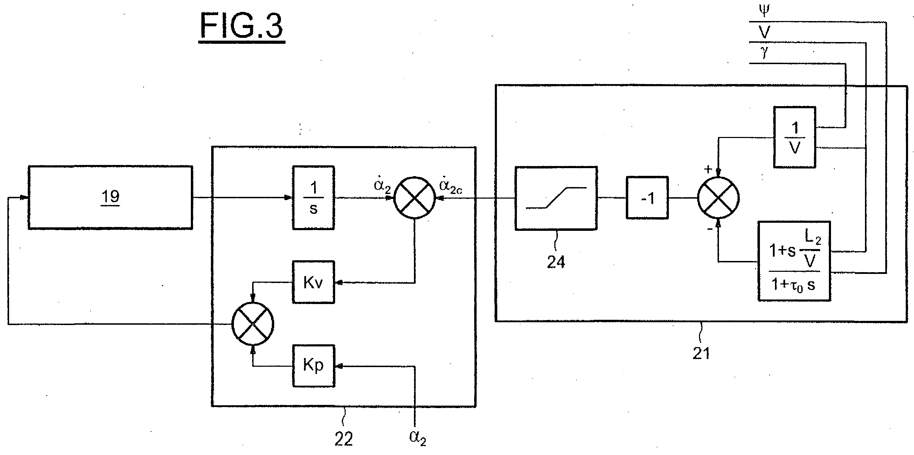

En pratique, l'actionneur est limité en puissance et plus particulièrement en vitesse maximale d'excursion de braquage. Pour tenir compte de ces limitations et garantir un fonctionnement compatible avec les capacités de l'actionneur, on peut saturer la consigne de vitesse en prenant en considération les vitesses maximales admissibles. La figure 3 donne un exemple de prise en compte de la saturation sous la forme d'un module de saturation 24 disposé dans le bloc 22 entre le soustracteur et la sortie pour limiter les valeurs de la consigne de vitesse $\alpha_{2c}$.

La présence de la saturation en vitesse fournit un moyen simple pour faire interagir le système avec un système de freinage piloté. Pour cela, il suffit d'analyser l'amplitude de la consigne de vitesse et de la comparer à la vitesse maximale admissible de l'actionneur. Si l'amplitude commandée en vitesse est trop importante, on compense la faiblesse de l'actionneur par l'actionnement du système de freinage piloté. Ce dernier contribue au contrôle de trajectoire en ajoutant son propre couple en lacet à celui fourni par le système.

## Revendications

1. Procédé de commande du braquage de roue directrice (5) pour un véhicule (1) à au moins trois roues, dans lequel en fonction d'une consigne antérieure de braquage de roue directrice, de caractéristiques géométriques et de données cinématiques du véhicule, comprenant la vitesse V, l'accélération transversale $\gamma$ et la vitesse de lacet $\dot{\psi}$ mesurée par un capteur, **caractérisé en ce que** on élabore une consigne actuelle de braquage de roue arrière par l'annulation de la vitesse de dérive de l'essieu arrière $\dot{\delta}_2$, calculée par la formule $\dot{\delta}_2 = \dfrac{\gamma}{V} - \dot{\psi} - \dfrac{\ddot{\psi}L_2}{V} - \dot{\alpha}_2$ où $L_2$ est la distance du centre de gravité à l'essieu arrière et $\alpha_2$ est l'angle de braquage de l'essieu arrière.

2. Procédé selon la revendication 1, dans lequel les caractéristiques géométriques du véhicule comprennent l'empattement L et la distance du centre de gravité à l'essieu directeur $L_i$.

3. Procédé selon la revendication 1 ou 2, dans lequel la commande de braquage est fournie par $s\alpha_2 = \dfrac{\gamma}{V} - s\psi\left(1 + s\dfrac{L_2}{V}\right)$ dans le domaine de Laplace, avec $\alpha_2$ l'angle de braquage, $\gamma$ l'accélération transver-sale, V la vitesse, $\psi$ l'angle de lacet, et $L_2$ l'empattement.

4. Procédé selon l'une quelconque des revendications précédentes, dans lequel on élabore une consigne de position de braquage à partir de la consigne antérieure de braquage, on élabore une consigne de vitesse de braquage à partir des données cinématiques du véhicule, et on additionne la consigne de position de braquage et la consigne de vitesse.

5. Procédé selon l'une quelconque des revendications précédentes, dans lequel on élabore une consigne de vitesse de braquage en calculant la différence entre le quotient de l'accélération transversale par la vitesse et une fonction de la vitesse de lacet et de la vitesse.

6. Procédé selon la revendication 4 ou 5, dans lequel la consigne de vitesse de braquage est inférieure ou égale à la vitesse maximale de l'actionneur de braquage.

7. Procédé selon la revendication 4 ou 5, dans lequel, si la consigne de vitesse de braquage est supérieure à la vitesse maximale de l'actionneur de braquage, un système de freinage, un système de freinage pilote est actionné.

**8.** Système (10) de commande du braquage de roue directrice (5) pour un véhicule (1) à au moins trois roues, **caractérisé par le fait qu'**il comprend un moyen d'élaboration d'une consigne actuelle de braquage de roue arrière mettant en oeuvre un procédé selon l'une des revendications précédentes.

**9.** Système selon la revendication 8, dans lequel le moyen d'élaboration comprend un module (22) de contre-réaction

configuré pour calculer $s\alpha_2 = -(\dfrac{\gamma}{V} - s\psi \dfrac{1 + s\dfrac{L_2}{V}}{1 + \tau_0 s})$ dans le domaine de Laplace avec $\alpha_2$ l'angle de braquage,

$\gamma$ l'accélération transversale, V la vitesse, $\psi$ l'angle de lacet, $L_2$ l'empattement et $\tau_0 = 10\dfrac{L_2}{V}$.

**10.** Véhicule (1) comprenant un châssis (2), au moins trois roues (3 à 5) reliées élastiquement au châssis (2), et un système (10) de commande selon la revendication 8 ou 9.

**Patentansprüche**

**1.** Verfahren zur Steuerung der Lenkung eines gelenkten Rades (5) für ein Fahrzeug (1) mit mindestens drei Rädern, wobei, in Abhängigkeit von einem vorhergehenden Lenksollwert eines gelenkten Rades, von geometrischen Merkmalen und kinematischen Daten des Fahrzeugs, umfassend die Geschwindigkeit V, die Querbeschleunigung Y und die Giergeschwindigkeit $\psi$, gemessen von einem Sensor, **dadurch gekennzeichnet, dass** ein aktueller Lenksollwert eines Hinterrades durch Aufhebung der Driftgeschwindigkeit der Hinterachse $\delta_2$, die durch die Formel

$\dot{\delta}_2 = \dfrac{\gamma}{V} - \dot{\psi} - \dfrac{\ddot{\psi}L_2}{V} - \dot{\alpha}_2$ berechnet wird, wobei $L_2$ der Abstand vom Schwerpunkt zur Hinterachse ist, und $\alpha_2$ der Lenkwinkel der Hinterachse ist, ausgearbeitet wird.

**2.** Verfahren nach Anspruch 1, bei dem die geometrischen Merkmale des Fahrzeugs den Radstand L und den Abstand vom Schwerpunkt zur Lenkachse $L_i$ umfassen.

**3.** Verfahren nach Anspruch 1 oder 2, bei dem die Steuerung der Lenkung durch $s\alpha_2 = \dfrac{\gamma}{V} - s\psi(1 + s\dfrac{L_2}{V})$ im Laplace-Bereich geliefert wird, wobei $\alpha_2$ der Lenkwinkel, Y die Querbeschleunigung, V die Geschwindigkeit, $\psi$ der Gierwinkel und $L_2$ der Radstand ist.

**4.** Verfahren nach einem der vorhergehenden Ansprüche, bei dem ein Lenkpositionssollwert aus dem vorherigen Lenksollwert ausgearbeitet wird, ein Lenkgeschwindigkeitssollwert aus kinematischen Daten des Fahrzeugs ausgearbeitet wird, und der Lenkpositionssollwert und der Geschwindigkeitssollwert addiert werden.

**5.** Verfahren nach einem der vorhergehenden Ansprüche, bei dem ein Lenkgeschwindigkeitssollwert ausgearbeitet wird, wobei die Differenz zwischen dem Quotienten der Querbeschleunigung durch die Geschwindigkeit und einer Funktion der Giergeschwindigkeit und der Geschwindigkeit berechnet wird.

**6.** Verfahren nach Anspruch 4 oder 5, bei dem der Lenkgeschwindigkeitssollwert kleiner oder gleich der Maximalgeschwindigkeit der Lenkbetätigungseinrichtung ist.

**7.** Verfahren nach Anspruch 4 oder 5, bei dem, wenn der Lenkgeschwindigkeitssollwert größer als die Maximalgeschwindigkeit der Lenkbetätigungseinrichtung ist, ein Bremssystem, ein Pilotbremssystem betätigt wird.

**8.** System (10) zur Steuerung der Lenkung eines gelenkten Rades (5) für ein Fahrzeug (1) mit mindestens drei Rädern, **dadurch gekennzeichnet, dass** es ein Mittel zur Ausarbeitung eines aktuellen Lenksollwerts eines Hinterrades umfasst, das ein Verfahren nach einem der vorhergehenden Ansprüche einsetzt.

**9.** System nach Anspruch 8, bei dem das Ausarbeitungsmittel ein Gegenreaktionsmodul (22) umfasst, das derart konfiguriert ist, dass es $s\alpha_2 = -(\dfrac{\gamma}{V} - s\psi\,\dfrac{1 + s\dfrac{L_2}{V}}{1 + \tau_0 s})$ im Laplace-Bereich berechnet, wobei $\alpha_2$ der Lenkwinkel, Y

die Querbeschleunigung, V die Geschwindigkeit, $\psi$ der Gierwinkel, $L_2$ der Radstand und $\tau_0 = 10\dfrac{L_2}{V}$ ist.

10. Fahrzeug (1), umfassend ein Gestell (2), mindestens drei Räder (3 bis 5), die elastisch mit dem Gestell (2) verbunden sind, und ein Steuersystem (10) nach Anspruch 8 oder 9.

**Claims**

1. Method for controlling the steering of a steered wheel (5) of an at least three-wheeled vehicle (1), in which as a function of an earlier steered-wheel steering instruction, of geometric characteristics and of kinematic data pertaining to the vehicle, comprising the speed V, the transverse acceleration $\gamma$ and the yaw velocity $\dot{\psi}$ measured by a sensor, **characterized in that** a current rear wheel steering instruction is formulated by cancelling the rear axle slide-slip velocity $\dot{\delta}_2$, calculated using the formula $\dot{\delta}_2 = \dfrac{\gamma}{V} - \dot{\psi} - \dfrac{\dot{\psi}L_2}{V} - \dot{\alpha}_2$, where $L_2$ is the distance from the centre of gravity to the rear axle and $\alpha_2$ is the rear axle steering angle.

2. Method according to Claim 1, in which the geometric characteristics of the vehicle comprise the wheelbase L and the distance from the centre of gravity to the steered axle $L_i$.

3. Method according to Claim 1 or 2, in which the steering command is provided by $s\alpha_2 = \dfrac{\gamma}{V} - s\psi(1 + s\dfrac{L_2}{V})$ in the Laplace domain, where $\alpha_2$ is the steering angle, $\gamma$ is the transverse acceleration, V is the speed, $\psi$ is the yaw angle and $L_2$ is the wheelbase.

4. Method according to any one of the preceding claims, in which a steering position instruction is formulated on the basis of the earlier steering instruction, a steering rate instruction is formulated from the kinematic data pertaining to the vehicle, and the steering position instruction and the rate instruction are added.

5. Method according to any one of the preceding claims, in which a steering rate instruction is formulated by calculating the difference between the quotient of the transverse acceleration and the speed, and a function of the yaw velocity and of the speed.

6. Method according to Claim 4 or 5, in which the steering rate instruction is less than or equal to the maximum speed of the steering actuator.

7. Method according to Claim 4 or 5, in which if the steering rate instruction is higher than the maximum speed of the steering actuator, a braking system, an automatic braking system is actuated.

8. System (10) for controlling the steering of a steered wheel (5) for an at least three-wheeled vehicle (1), **characterized in that** it comprises a means of formulating a current rear wheel steering instruction employing a method according to one of the preceding claims.

9. System according to Claim 8, in which the formulating means comprises a feedback module (22) configured to calculate $s\alpha_2 = -(\dfrac{\gamma}{V} - s\psi\,\dfrac{1 + s\dfrac{L_2}{V}}{1 + \tau_0 s})$ in the Laplace domain where $\alpha_2$ is the steering angle, $\gamma$ is the transverse acceleration, V is the speed, $\psi$ is the yaw angle, $L_2$ is the wheelbase and $\tau_0 = 10\dfrac{L_2}{V}$.

10. Vehicle (1) comprising a chassis (2) with at least three wheels (3 to 5) elastically connected to the chassis (2), and a control system (10) according to Claim 8 or 9.

# FIG.1

# FIG.2

EP 2 032 415 B1

# FIG.3

EP 2 032 415 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2681303 A
- US 2002198646 A
- US 200355547 B
- US 200360959 B
- US 200232509 B
- US 6345218 B1